# EUROPEAN PATENT APPLICATION

(11) **EP 0 887 359 A1**
(43) Date of publication of application: **30.12.1998**
(21) Application number: 98111908.4
(22) Date of filing: 26.06.1998
(51) Int. Cl.: C08F 10/06, C08F 6/00, C08F 2/00

(54) **Process for propylene polymerization**

(30) Priority: 26.06.1997 JP 170716/97
(71) Applicant: Mitsui Chemicals, Inc., Tokyo 100-6070 (JP)
(72) Inventor: Hayashi, Shigeki, Ichihara-shi, Chiba 299-0108 (JP); Nishikawa, Hiroshi, Ichihara-shi, Chiba 299-0108 (JP)
(74) Representative: Hansen, Bernd, Dr. Dipl.-Chem.

(57) **Abstract**

Disclosed is a process for propylene polymerization comprising the steps of feeding propylene containing not less than 0.1 % by weight and not more than 20 % by weight of propane to a polymerization reactor, distilling at least a part of unreacted propylene discharged from the reactor to remove propane contained in the unreacted propylene, and circulating the purified propylene into the polymerization reactor, whereby propane is drawn out from the polymerization reaction system. The propane concentration in the unreacted propylene discharged from the polymerization reactor is in the range of usually 90 to 98 % by weight, and the purified propylene concentration to be circulated into the reactor after the distillation can be set in the range of 60 to 98 % by weight. At least a part of the purified propylene obtained after the distillation is preferably circulated into the reactor as a liquid. According to the process for propylene polymerization, propane is efficiently drawn out from the polymerization reaction system, whereby propylene can be efficiently polymerized, and besides the size of an apparatus for distillation of propylene can be made small.

## Description

### FIELD OF THE INVENTION

The present invention relates to a process for propylene polymerization wherein propane as an impurity is efficiently drawn out from the polymerization reactor to efficiently polymerize propylene, and more particularly to a process for propylene polymerization wherein heat of polymerization can be also utilized effectively.

### BACKGROUND OF THE INVENTION

In olefin polymerization, starting materials for polymerization are previously purified and fed to the polymerization reaction system. In the purification of the polymerization raw materials, not only impurities which have bad influences on the polymerization reaction but also impurities which are inert to the polymerization reaction and have no influence on the qualities of the resulting polymer products are generally removed.

Especially in case of using propylene as a polymerization raw material, propane which is inert to the polymerization reaction is included as an impurity. That is, propylene generally contains propane as an impurity, and typically, about 5 % by weight of propane is contained in propylene of industrial grade.

In the propylene polymerization, independent of gas phase polymerization or liquid phase polymerization, the unreacted propylene discharged from the polymerization reactor is generally recycled for the polymerization reaction by circulating the unreacted propylene into the polymerization reactor in the form of a liquid that is obtained by cooling the unreacted propylene or in the form of a gas.

In the recycling of the unreacted propylene, the unreacted propylene containing propane is circulated as it is. Propane is inert to the polymerization reaction and is not consumed in the polymerization, so that the propane introduced into the polymerization reactor together with the propylene as a raw material (starting propylene) accumulates as the polymerization reaction proceeds, whereby the propane concentration in the polymerization reactor is increased and the propylene reaction capacity (efficiency) is relatively decreased.

In order to prevent the above problem, propylene is generally fed to the polymerization reactor after propane is removed from the propylene, as described above.

In the removal of propane from propylene, however, it is difficult to separate propane from propylene by a simple distillation apparatus because propylene and propane have low boiling points (-47.0 °C and -42.1 °C, respectively) at atmospheric pressure. On this account, the distillation purification of propylene is generally carried out under high pressure, but the difference of boiling point between propylene and propane becomes smaller as the distillation pressure is increased, so that the reflux ratio must be made large. This requires a large-sized distillation apparatus and results in enormous energy consumption. Moreover, the large-sized high-pressure distillation apparatus is extremely expensive. Therefore, the cost for purifying propylene becomes high, and as a result the production cost of polypropylene is increased.

### OBJECT OF THE INVENTION

The present invention has been made under such circumstances as described above, and it is an object of the invention to provide a process for propylene polymerization capable of using a small-sized distillation apparatus to separate propane from propylene, reducing energy consumption, and efficiently drawing out propane from the polymerization reaction system to efficiently polymerize propylene.

### SUMMARY OF THE INVENTION

The process for propylene polymerization according to the present invention is a process comprising polymerizing propylene while circulating, into a polymerization reactor, unreacted propylene discharged from the polymerization reactor, wherein:
propylene containing not less than 0.1 % by weight and not more than 20 % by weight of propane is fed to the polymerization reactor as a polymerization raw material, and
at least a part of the unreacted propylene discharged from the polymerization reactor is distilled to remove propane contained in the unreacted propylene, and the thus purified propylene is circulated into the polymerization reactor, whereby propane is drawn out from the polymerization reaction system.

In the above process, it is preferable that the unreacted propylene discharged from the polymerization reactor and to be purified by distillation generally contains propane in an amount of 0.1 to 60 % by weight based on 100 % by weight of the total of propylene and propane discharged from the polymerization reactor.

The concentration of propane removed by distillation is desirably in the range of 90 to 98 % by weight based on 100 % by weight of the total of propane and propylene removed by distillation.

The concentration of propylene circulated into the polymerization reactor after the distillation is desirably in the range of 60 to 98 % by weight based on 100 % by weight of the total of propane and propylene circulated into the polymerization reactor from a distillation apparatus.

By circulating propylene having been purified by removing propane by the distillation, the propylene concentration (or propane concentration) in the polymerization reactor can be controlled, and thereby the polymerization pressure can be changed.

At least a part of the purified propylene to be circulated into the polymerization reactor after the distillation is preferably liquid.

In the present invention, the gas-liquid fractions of the purified propylene (quantity of liquefied propylene) to be circulated into the polymerization reactor and the quantity of the unreacted propylene discharged from the reactor are controlled as described above, whereby the polymerization temperature in the polymerization reactor can be controlled.

If the process of the present invention is conducted in accordance with the aforementioned features, propane can be efficiently drawn out from the polymerization reaction system, and propylene can be efficiently polymerized.

### BRIEF DESCRIPTION OF THE DRAWINGS

Fig. 1 schematically illustrates an embodiment of liquid phase polymerization of the process for propylene polymerization according to the present invention.

Fig. 2 schematically illustrates an embodiment of gas phase polymerization of the process for propylene polymerization according to the present invention.

### DETAILED DESCRIPTION OF THE INVENTION

The process for propylene polymerization according to the invention is described in detail hereinafter.

The meaning of the term "polymerization" used herein is not limited to "homopolymerization" but may comprehend "copolymerization". Also, the meaning of the term "polymer" used herein is not limited to "homopolymer" but may comprehend "copolymer".

The process for propylene polymerization according to the invention is a process comprising polymerizing propylene while circulating, into a polymerization reactor, unreacted propylene discharged from the polymerization reactor, wherein:
propylene containing not less than 0.1 % by weight and not more than 20 % by weight of propane is fed to the polymerization reactor as a polymerization raw material, and
at least a part of the unreacted propylene discharged from the polymerization reactor is distilled to remove propane contained in the unreacted propylene, and the thus purified propylene is circulated into the polymerization reactor, whereby propane is drawn out from the polymerization reaction system.

Propylene used as a starting material in the propylene polymerization occasionally contains impurities having bad influences on the polymerization reaction, such as water, carbon monoxide, carbon dioxide and alcohol. The impurities having bad influences on the polymerization reaction are sometimes removed by adsorption treatment or other treatment according to necessity, before propylene is fed into the polymerization reactor.

The starting propylene, however, contains impurities inert to the polymerization reaction, e.g., propane, in a considerably large amount. To increase the efficiency of distillation, it is desirable that the minimum concentration of propane is 0.1 % by weight, preferably 0.5 % by weight, and more preferably 5 % by weight, based on 100 % by weight of the total of propylene and propane in the starting propylene. And to increase the efficiency of polymerization, it is desirable that the maximum concentration of propane is 20 % by weight, preferably 10 % by weight, based on 100 % by weight of the total of porpylene and propane in the starting propylene.

As described above, separation of propane from propylene must be carried out by distillation. In the present invention, the impurities having bad influences on the polymerization reaction are removed by adsorption or the like, but propane is not substantially removed from the starting propylene, and the propylene containing propane is fed to the polymerization reactor.

In the present invention, polymerization of propylene may be carried out as liquid phase (slurry or homogeneous solution) polymerization or gas phase polymerization.

Further, propylene may be homopolymerized, or may be copolymerized with other monomers described later. There is no need to remove propane contained as an impurity in other copolymerizable monomers prior to feeding the monomers, similarly to the case of propylene.

In the reaction system, hydrogen as a molecular weight modifier, a hydrocarbon solvent inert to polymerization reaction such as hexane, or an inert gas such as nitrogen may be present together with propylene and other copolymerizable monomers.

Though the polymerization conditions vary depending upon desired properties of the propylene polymer, type and copolymerization proportion of the copolymerizable monomer, and type of polymerization, the polymerization pressure is in the range of usually atmospheric pressure to 100 kg/cm², preferably atmospheric pressure to 50 kg/cm², and the polymerization temperature is in the range of 20 to 200 °C, preferably 40 to 150 °C. The polymerization can be carried out in two or more stages.

The molecular weight of the resulting propylene polymer can be adjusted by controlling the amount of hydrogen (molecular weight modifier) used or by varying the polymerization conditions such as polymerization temperature.

The process for propylene polymerization is described below in more detail with reference to the attached drawings.

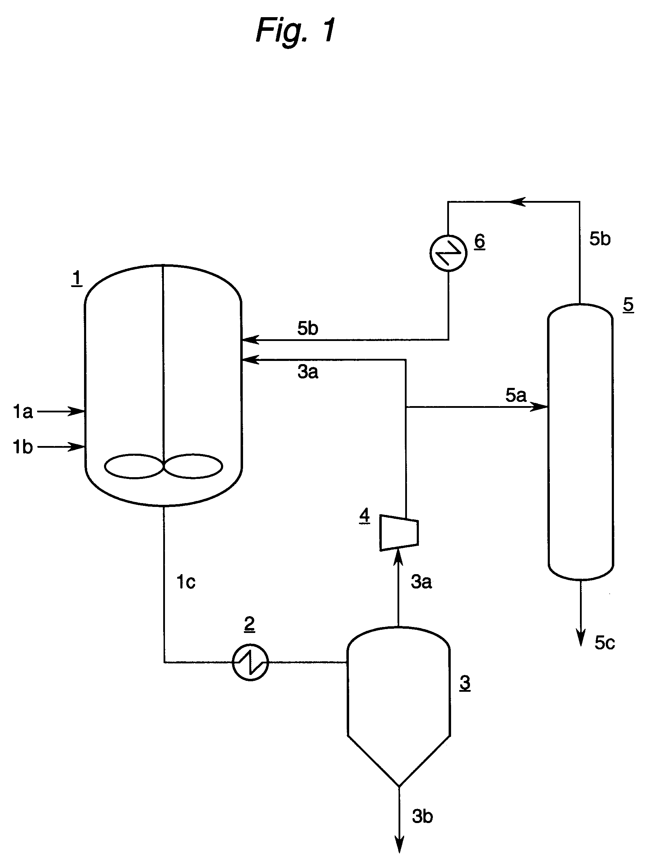

Fig. 1 schematically illustrates an embodiment of the process for propylene polymerization according to the invention, which is conducted as a liquid phase polymerization process.

As described above, the starting propylene containing propane in an amount of not less than 0.1 % by weight and not more than 20 % by weight is fed, usually in the form of a liquid, to a polymerization reactor 1 from a raw material line 1a.

In the polymerization reactor 1, propylene is polymerized (or copolymerized with a copolymerizable monomer fed from, for example, the raw material line 1a) in a liquid phase in the presence of the later-described catalyst fed from a catalyst line 1b. To the polymerization reactor 1, a hydrocarbon solvent such as hexane can be fed from an optional feed line (not shown), if necessary.

The polymerization solution discharged from the polymerization reactor 1 contains a propylene polymer and unreacted propylene, and this polymerization solution is led to a separator 3 (e.g., flush drum or hopper) from a line 1c through a heat exchanger 2. In the separator 3, the polymerization solution is separated into the propylene polymer and the unreacted propylene. The propylene polymer is then recovered through a line 3b.

On the other hand, the unreacted propylene is circulated into the polymerization reactor 1 from a circulating line 3a of the separator 3 through a compressor 4, and this unreacted propylene contains propane introduced together with the starting material. The unreacted propylene may contain hydrogen, a copolymerizable monomer and a catalyst component.

In the present invention, prior to circulating the unreacted propylene into the polymerization reactor 1, propane is removed from at least a part of the unreacted propylene by distillation. In detail, at least a part of the unreacted propylene in the circulating line 3a is led to a distillation apparatus 5 through a line 5a and separated into propylene and propane by distillation.

The unreacted propylene is led to the distillation apparatus 5 from the circulating line 3a in an amount depending on the propane concentration in the polymerization reactor, and the unreacted propylene in the circulating line 3a may be partially or wholly introduced into the distillation apparatus 5. In general, about 50 to 100 % by weight of the unreacted propylene in the circulating line 3a is desirably led to the distillation apparatus 5.

The propane separated by the distillation apparatus 5 as described above is discharged outside the reaction system from a line 5c.

On the other hand, the purified propylene is cooled by a heat exchanger 6 and then circulated into the polymerization reactor 1 through a line 5b. It is preferable that at least a part of the purified propylene is liquefied prior to the circulation of the purified propylene into the polymerization reactor 1.

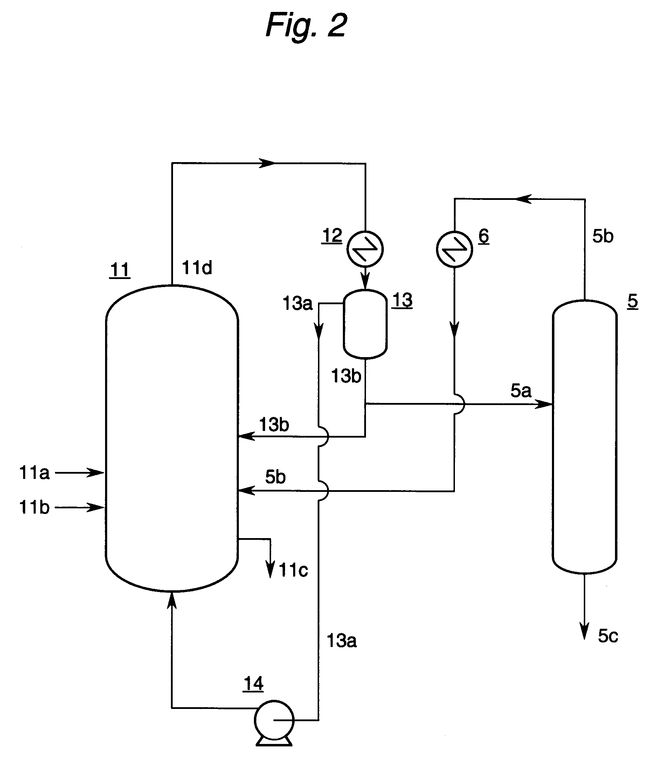

Fig. 2 schematically illustrates an embodiment of the process for propylene polymerization according to the invention, which is conducted as a gas phase polymerization process.

As in Fig. 1, the same starting propylene is fed to a polymerization reactor 11 from a starting material line 11a.

In the polymerization reactor 11, propylene is polymerized (or copolymerized with other monomers) in a gas phase. To the polymerization reactor 11, an inert gas such as nitrogen can be fed, if necessary.

The resulting propylene polymer is continuously or intermittently drawn out from a polymer recovery outlet 11c.

The unreacted propylene discharged from a line 11d of the polymerization reactor 11 contains propane introduced together with the starting material. The unreacted propylene may contain hydrogen, a copolymerizable monomer, an inert gas and a catalyst component.

The unreacted propylene is generally cooled by a heat exchanger 12 and then separated into a condensate and a gas phase by a separator (gas-liquid separator) 13. The gas phase is circulated into the polymerization reactor 11 from a line 13a through a compressor 14, while the condensate is circulated into the polymerization reactor 11 from a line 13b.

In the present invention, at least a part of the condensate (unreacted propylene) in the line 13b is led to a distillation apparatus 5 through a line 5a and separated into propylene and propane by distillation. That is, similarly to the case in Fig. 1, the unreacted propylene is purified by distillation, propane is discharged outside the reaction system, and the purified propylene is circulated into the polymerization reactor 11. The unreacted propylene (condensate) is led to the distillation apparatus 5 from the circulating line 13b in an amount depending on the propane concentration in the polymerization reactor 11, and the unreacted propylene in the circulating line 13b may be partially or wholly introduced into the distillation apparatus 5. In general, about 50 to 100 % by weight of the unreacted propylene in the circulating line 13b is desirably led to the distillation apparatus 5.

The propane separated by the distillation apparatus 5 as described above is discharged outside the reaction system from a line 5c.

On the other hand, the purified propylene is cooled by a heat exchanger 6 and then circulated into the polymerization reactor 11 through a line 5b. It is preferable that at least a part of the purified propylene is liquefied prior to the circulation of the purified propylene into the polymerization reactor 11.

The distillation separation of propane from the unreacted propylene in the distillation apparatus 5 in Fig. 1 and Fig. 2 is described below in more detail.

The distillation separation of propane from the unreacted propylene may be carried out simultaneously with initiation of the polymerization reaction, or may be carried out after the polymerization reaction falls into a steady state. A high concentration of propane in the unreacted propylene gives high distillation efficiency. In the present invention, therefore, it is preferable from the viewpoint of distillation efficiency that the distillation is started after propane accumulates in the reaction system and a certain level of propane concentration in the unreacted propylene discharged from the polymerization reactor is reached, though the distillation may be started immediately after initiation of the polymerization reaction, that is, at the time when the propane concentration in the reaction system is lower than that in the steady state of the polymerization reaction. The distillation can be started immediately after initiation of the polymerization reaction by introducing propane before initiation of the polymerization reaction in such a manner that the propane concentration in the reactor becomes equal to that in the steady state of the polymerization reaction.

The distillation rate may be varied to continue the distillation after the steady state is reached, if necessary, or the distillation may be temporarily kept in a total reflux state according to circumstances.

In the present invention, it is desired to distill unreacted propylene containing propane in an amount of 0.1 to 60 % by weight, preferably 5 to 60 % by weight, more preferably 10 to 50 % by weight, still more preferably 10 to 40 % by weight. This propane concentration is a value based on 100 % by weight of the total of propylene and propane in the unreacted propylene, and is substantially a concentration of propane in the polymerization reactor 1.

As the distillation apparatus 5, a generally known low-pressure or high-pressure fractionating column is employable. In the present invention wherein the unreacted propylene containing propane in a high concentration is distilled as described above, the fractionating column has only to comprise a structure with a recovery plate (recovery zone), and if necessary, also with a concentration plate (concentration zone). The distillation purification of the unreacted propylene can be carried out under conditions hitherto known.

In the present invention, the polymerization raw material, from which no propane has been removed, is fed to the polymerization reactor, so that propane is present in the polymerization reactor in a high concentration. If the unreacted propylene containing propane in a high concentration is distilled, propane can be efficiently distilled off from the unreacted propylene, and therefore the size of a distillation apparatus can be made small.

That is, in the present invention, not only the concentration plate has only to be optionally provided but also the number of the recovery plates can be remarkably decreased, as compared with the case of distillation purification of the starting propylene. Moreover, the size of a distillation apparatus can be made considerably small, and the reflux ratio can be made small. As a result, energy consumption for the removal of propane can be reduced.

It is desirable that the concentration of propane discharged outside the reaction system from the line 5c by the above distillation is in the range of 90 to 98 % by weight, preferably 94 to 98 % by weight, with the proviso that the total of propane and propylene discharged from the line 5c is 100 % by weight.

It is desirable that the concentration of propylene purified by the distillation apparatus 5 and circulated into the polymerization reactor from the line 5b is in the range of 60 to 98 % by weight, preferably 70 to 95 % by weight, with the proviso that the total of propylene and propane circulated into the polymerization reactor from the distillation apparatus 5 is 100 % by weight.

By circulating the purified propylene into the polymerization reactor as described above, the propylene concentration (or propane concentration) in the polymerization reactor can be controlled, and thereby the polymerization pressure can be changed.

Further, by controlling the quantity of the liquefied propylene to be circulated from the line 5b, namely, gas-liquid fractions of propylene, and by controlling the quantity of the unreacted propylene discharged from the polymerization reactor, the polymerization temperature in the polymerization reactor can be controlled.

The process for propylene polymerization according to the invention is described above with reference to the attached drawings schematically illustrating embodiments of the liquid phase polymerization and the gas phase polymerization, but the invention is not limited to those drawings.

In the propylene polymerization in the invention, propylene can be copolymerized with other monomers. Examples of the other monomers include α-olefins of 2 to 18 carbon atoms, such as ethylene, 1-butene, 1-pentene, 1-hexene, 4-methyl-1-pentene, 1-octene and 1-decene; cycloolefins of 3 to 18 carbon atoms; vinylidene aromatic monomers represented by CR₂=CR-Ph (each R is independently hydrogen or methyl, Ph is phenyl or p-alkyl-substituted phenyl, and R and Ph may have a halogen substituent), such as styrene; vinyl monomers, such as vinyl chloride, vinyl acetate, vinyl acrylate, methyl methacrylate, tetrafluoroethylene, vinyl ether and acrylonitrile; conjugated dienes, such as butadiene and isoprene; non-conjugated polyenes, such as 1,4-hexadiene, dicyclopentadiene and 5-vinyl-2-norbornene; acetylenes, such as acetylene and methylacetylene; and aldehydes, such as formaldehyde.

These monomers may be used in combination of two or more kinds.

As the catalyst, any of conventional propylene polymerization catalysts, such as a metallocene catalyst, a Ziegler type titanium catalyst and a Philip type chromium oxide catalyst, can be used without specific limitation.

The propylene polymerization catalysts generally comprise a transition metal catalyst component and a cocatalyst component, and preferably further comprise an electron donor.

The transition metal catalyst component employable herein is a transition metal compound [A] selected from Group IVB of the periodic table, and the transition metal compound is represented by, for example, the following formula (i):

MLx (i)

wherein M is a transition metal selected from Zr, Ti, Hf; V, Nb, Ta and Cr; L is a ligand coordinated to the transition metal and is a hydrogen atom, a halogen atom, an oxygen atom, a hydrocarbon group of 1 to 30 carbon atoms which may have a substituent, an alkoxy group, an aryloxy group, a trialkylsilyl group or a SO₃R group (R is a hydrocarbon group of 1 to 8 carbon atoms which may have a substituent such as halogen); and x is a valence of the transition metal.

Examples of the halogen atoms include fluorine, chlorine, bromine and iodine.

Examples of the hydrocarbon groups of 1 to 30 carbon atoms include:
alkyl groups, such as methyl, ethyl, propyl, isopropyl and butyl;
cycloalkyl groups, such as cyclopentyl and cyclohexyl;
aryl groups, such as phenyl, tolyl and cyclopentadienyl; and
aralkyl groups, such as benzyl and neophyl.

The cycloalkyl groups, the aryl groups and the aralkyl groups may be substituted in part with halogen atoms, alkyl groups and trialkylsilyl groups.

When plural hydrocarbon groups selected from the cycloalkyl groups, the aryl groups and the aralkyl groups are coordinated, they may be bonded through alkylene groups such as ethylene and propylene, substituted alkylene groups such as isopropylidene and diphenylmethylene, a silylene group, and substituted silylene groups such as dimethylsilylene, diphenylsilylene and methylphenylsilylene.

Examples of the alkoxy groups include methoxy, ethoxy and butoxy. Examples of the aryloxy groups include phenoxy.

The compounds mentioned above may be used in combination of two or more kinds, and they may be used after diluted with hydrocarbon or halogenated hydrocarbon.

The transition metal compound can be fed to the polymerization system as a solid. For example, the transition metal compound can be contacted with a particulate carrier compound and used with the carrier compound. Examples of the carrier compounds include inorganic compounds, such as SiO₂, Al₂O₃, B₂O₃, MgO, ZrO₂, CaO, TiO₂, ZnO, Zn₂O, SnO₂, BaO, MgCl₂ and NaCl; and resins, such as polyethylene, polypropylene, poly-1-butene, poly-4-methyl-1-pentene and a styrene/divinylbenzene copolymer. The carriers can be used in combination of two or more kinds. The carrier compound may be formed into particles in the contact stage with the transition metal compound.

The solid transition metal catalyst component may be a solid titanium catalyst component comprising magnesium, titanium, halogen and an electron donor, which is obtained by, for example, contacting a magnesium compound, a titanium compound and an electron donor with each other.

The cocatalyst component employable for forming the olefin polymerization catalyst is a compound selected from [B] an organoaluminum compound, an organoaluminum halide compound, an aluminum halide compound, an organoboron compound, an organoboron oxy-compound, an organoboron halide compound, a boron halide compound and an organoaluminum oxy-compound.

The compounds [B] except the organoaluminum oxy-compound are represented by the following formula (ii):

BRx (ii)

wherein B is an aluminum atom or a boron atom.

When the compound represented by the formula (ii) is an organoaluminum compound or an organoboron compound, R represents an alkyl group of 1 to 30 carbon atoms.

When the compound represented by the formula (ii) is an aluminum halide compound or a boron halide compound, R represents a halogen atom.

When the compound represented by the formula (ii) is an organoaluminum halide compound or an organoboron halide compound, R represents both of an alkyl group of 1 to 30 carbon atoms and a halogen atom.

Examples of the halogen atoms include fluorine, chlorine, bromine and iodine. Examples of the alkyl groups of 1 to 30 carbon atoms include methyl, ethyl, propyl, isopropyl, butyl and isobutyl.

The organoaluminum oxy-compound is represented by the following formula (iii) or (iv).

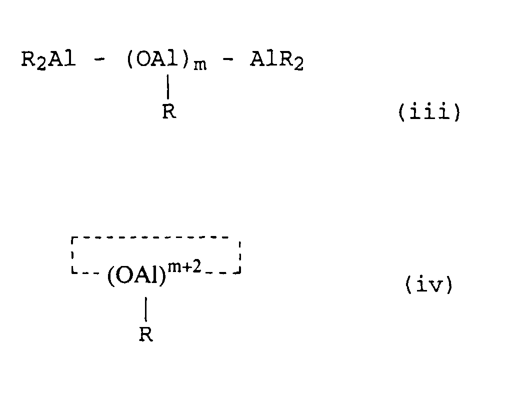

In the above formulas, R is a hydrocarbon group such as methyl, ethyl, propyl or butyl, and m is an integer of 2 or greater, preferably an integer of 5 to 40.

The aluminoxane (organoaluminum oxy-compound) may by formed from mixed alkyloxyaluminum units consisting of alkyloxyaluminum units represented by the formula OAl(R¹) (R¹ is the same group as described for the above R) and alkyloxyaluminum units represented by the formula OAl(R²) (R² is the same group as described for the above R but is different from R¹).

A part of Rs in the alkyloxyaluminum units may be each halogen, hydrogen, an alkoxy group, an aryloxy group or a hydroxyl group.

The organoaluminum oxy-compound used herein may be such a benzene-insoluble organoaluminum oxy-compound as exemplified in Japanese Patent Laid-Open Publication No. 78687/1990.

The cocatalyst components (B) can be used in combination of two or more kinds, and they may be used after diluted with hydrocarbon or halogenated hydrocarbon.

In the present invention, an electron donor can be used as a component of the propylene polymerization catalyst together with the transition metal catalyst component and the cocatalyst component. Examples of the electron donors include ether compounds, carbonyl compounds and alkoxy compounds.

In the present invention, further, a prepolymerized catalyst formed by prepolymerizing an olefin onto the above catalyst components can be employed.

### EFFECT OF THE INVENTION

According to the process for propylene polymerization of the invention, propane can be efficiently drawn out from the polymerization reaction system, and thereby propylene can be efficiently polymerized. In the present invention, the size of a distillation apparatus for removing propane can be made considerably small, and the reflux ratio can be made small. Therefore, energy consumption necessary for drawing out propane can be reduced.

## Claims

1. A process for propylene polymerization, comprising polymerizing propylene while circulating, into a polymerization reactor, unreacted propylene discharged from the polymerization reactor, wherein:
propylene containing not less than 0.1 % by weight and not more than 20 % by weight of propane is fed to the polymerization reactor as a polymerisation raw material, and
at least a part of the unreacted propylene discharged from the polymerization reactor is distilled to remove propane contained in the unreacted propylene, and the thus purified propylene is circulated into the polymerization reactor, whereby propane is drawn out from the polymerization reaction system.

2. The process for propylene polymerization as claimed in claim 1, wherein the unreacted propylene discharged from the polymerization reactor and to be purified by distillation contains propane in an amount of 0.1 to 60 % by weight based on 100 % by weight of the total of propylene and propane in the unreacted propylene.

3. The process for propylene polymerization as claimed in claim 1, wherein the concentration of propane removed by distillation is in the range of 90 to 98 % by weight based on 100 % by weight of the total of propane and propylene removed by distillation.

4. The process for propylene polymerization as claimed in claim 1, wherein the concentration of propylene circulated into the polymerization reactor after the distillation is in the range of 60 to 98 % by weight based on 100 % by weight of the total of propane and propylene circulated into the polymerization reactor from a distillation apparatus.

5. The process for propylene polymerization as claimed in claim 1, wherein propylene having been purified by removing propane by the distillation is circulated into the polymerization reactor to control the propylene concentration in the polymerization reactor.

6. The process for propylene polymerization as claimed in claim 1, wherein propylene to be circulated into the polymerization reactor after the distillation is cooled to liquefy at least a part of the propylene.

7. The process for propylene polymerization as claimed in claim 6, wherein the polymerization temperature in the polymerization reactor is controlled by controlling the quantity of the unreacted propylene discharged from the polymerization reactor and by controlling the gas-liquid fractions of propylene obtained in the manner as claimed in claim 6.
